# EUROPÄISCHE PATENTANMELDUNG

(11) **EP 4 802 951 A1**
(43) Veröffentlichungstag der Anmeldung: **09.09.2026**
(21) Anmeldenummer: 26162785.5
(22) Anmeldetag: 06.03.2026
(51) Int. Cl.: A47B 47/00, F16B 7/04, F16B 12/40

(54) **MODULARES, MEHRFACH MONTIERBARES UND DEMONTIERBARES GESTELLSYSTEM**

(30) Priorität: 06.03.2025 CH 222202025
(71) Anmelder: Duco System AG, 8157 Dielsdorf (CH)
(72) Erfinder: STRENG, Esther, 8008 Zürich (CH)
(74) Vertreter: Frei Patent Attorneys

(57) **Zusammenfassung**

Die vorliegende Erfindung betrifft ein modulares, mehrfach montierbares und demontierbares Gestellsystem. Von jedem Zentralelement 1 gehen eins bis vier entweder starre Kupplungsteile 2 oder Kupplungsteile mit einem elastischen Teil 4 für die Anordnung in der Horizontalen aus. Die rohrförmigen Verbindungselemente 3 für die Anordnung in der Horizontalen weisen an ihren beiden Enden je ein auf das starre Kupplungsteil 2 oder auf das Kupplungsteil mit einem elastischen Teil 4 am Zentralelement 1 abgestimmtes inwendiges Kupplungsteil auf. In vertikaler Richtung erfolgt die Verbindung gemäss einer ersten Variante zwischen einem starren Kupplungsteil 2 und einem Kupplungsteil mit einem elastischen Teil 4 oder gemäss einer zweiten Variante mittels Verschraubens der Verbindungsteile 8,9. Die Entriegelung erfolgt durch Einwirkung eines von aussen applizierten Stiftes durch die Öffnungen 5 in den rohrförmigen Verbindungselementen 3.

## Beschreibung

### Gebiet der Erfindung

Die vorliegende Erfindung betrifft ein modulares, mehrfach montierbares und demontierbares Gestellsystem.

### Stand der Technik

In EP 0 400 345 B1 sind Verbindungselemente und darauf basierende Gestellsysteme beschrieben. Dabei werden in rohrförmige Streben keilförmige Hülsen oder Keile eingeführt. Diese werden mittels einer Spannschraube gegeneinander gezogen, verkeilen sich dadurch mit den Streben und erzeugen dadurch eine kraftschlüssige Verbindung mit einem Eckelement oder mit einem innen liegenden Element. Die zahlreichen Einzelteile der Verbindungselemente sind nur in aufwändiger Weise herstellbar und benötigen zur Montage spezielle Werkzeuge. Die sich in den Eckelementen oder in den innen liegenden Elementen befindlichen Öffnungen sind immer sichtbar und sind ästhetisch unschön.

In EP 1 615 528 B1 werden ebenfalls Verbindungselemente und darauf basierende Gestellsysteme beschrieben. Das Verbindungselement zur Verbindung von rohrförmigen Streben weist von einem Zentralelement ausgehende Kupplungselemente auf, deren Längsachsen in einer gemeinsamen Ebene liegen. Die Kupplungselemente für die Anordnung in der Horizontalen weisen eine rotationszylindrische Grundform auf und haben mindestens eine Kupplungsausnehmung. Die Kupplungselemente werden mit den Streben mittels eines Bajonettverschlusses miteinander verbunden und verdreht. Die so erzeugte Verbindung wird mit einer Madenschraube fixiert.

Für die Entriegelung wird die Madenschraube gelöst und der Bajonettverschluss wird wieder aufgedreht.

Eine rohrförmige Strebe für die Anordnung in der Vertikalen wird durch die Lochplatte im Zentralelement entweder mit einem Fuss oder mit einer weiteren rohrförmigen Strebe für die Anordnung in der Vertikalen verschraubt.

Die Montage der einzelnen Teile benötigt viel Zeit und es besteht die Gefahr, dass Teile fehlerhaft eingeschraubt werden. Es kann vorkommen, dass die Schrauben entweder zu stark oder zu schwach angezogen werden.

In EP 1 444 912 A1 ist eine lösbare Schnappverbindung zwischen einem elastischen und einem starren Teil beschrieben. Dabei weist das Rastelement entlang seines Schaftes eine verschiebbar gelagerte Hülse zum Lösen der Schnappverbindung auf. Für diese Art einer lösbaren Verbindung wird die Bezeichnung "push to open" verwendet.

### Darstellung der Erfindung

Es ist ein Ziel der vorliegenden Erfindung, ein modulares, mehrfach montierbares und demontierbares Gestellsystem zur Verfügung zu stellen.

Mit diesem Gestellsystem sollen die oben genannten Nachteile behoben werden.

Dieses Gestellsystem soll so konzipiert sein, dass eine einfache Verbindung zwischen den einzelnen Verbindungsteilen ermöglicht wird. Dabei soll eine fehlerhafte Montage ausgeschlossen sein.

Dieses Gestellsystem soll stabil und mit einfach anwendbaren Werkzeugen montierbar und demontierbar sein.

Die verschiedenen Einzelteile sollen einfach, schnell, passgenau und kostengünstig herstellbar sein.

Die verschiedenen Einzelteile sollen einfach lagerbar sein.

Mit der vorliegenden Erfindung werden diese Ziele erreicht.

Das erfindungsgemässe modulare, mehrfach montierbare und demontierbare Gestellsystem, umfassend
- Verbindungsknoten-Elemente mit einem Zentralelement, von dem
   - Kupplungsteile für die Anordnung in der Horizontalen und
   - Kupplungsteile oder Verbindungselemente für die Anordnung in der Vertikalen ausgehen,
- rohrförmige Verbindungselemente mit Kupplungsteilen für die Anordnung in der Horizontalen,
- rohrförmige Verbindungselemente mit Kupplungsteilen oder mit verschraubbaren Verbindungselementen für die Anordnung in der Vertikalen,
- Fusselemente, sowie
- Abdeckteile,
   wobei alle genannten Kupplungsteile aufeinander abgestimmt, verriegelbar und entriegelbar sind, und wobei
   die rohrförmigen Verbindungselemente mit Kupplungsteilen oder mit verschraubbaren Verbindungselementen für die Anordnung in der Vertikalen durch die Zentralelemente entweder mit einem Fusselement oder mit einem weiteren rohrförmigen vertikalen Verbindungselement verbindbar oder verschraubbar sind,
   **ist dadurch gekennzeichnet, dass**
   jedes Verbindungsknoten-Element ein Zentralelement 1 aufweist,
   von jedem Zentralelement 1 eins bis vier entweder starre Kupplungsteile 2 oder Kupplungsteile mit einem elastischen Teil 4 für die Anordnung in der Horizontalen ausgehen, deren Längsachsen in einer Ebene liegen und in einem Winkel von 90° zur vertikalen Längsachse des Zentralelementes 1 angeordnet sind, und diese Kupplungsteile in einem Winkel von 90°, respektive in einem Winkel von 180°, zueinander angeordnet sind,
   die rohrförmigen Verbindungselemente 3 für die Anordnung in der Horizontalen an ihren beiden Enden je ein auf das starre Kupplungsteil 2 oder auf das Kupplungsteil mit einem elastischen Teil 4 am Zentralelement 1 abgestimmtes inwendiges Kupplungsteil aufweisen,
   jedes rohrförmige Verbindungselement 3 für die Anordnung in der Horizontalen an beiden Endbereichen in der Aussenwand je eine in einer Linie angeordnete Öffnung 5 aufweist, durch welche der elastische Teil 4 sichtbar ist, wobei die genannte Linie parallel zur Längsachse des rohrförmigen Verbindungselementes 3 für die Anordnung in der Horizontalen verläuft, und wobei die genannte Linie und die genannte Längsachse in einer planaren Ebene liegen,
   wobei gemäss einer ersten Variante
   von jedem Zentralelement 1 ein oder zwei entweder starre Kupplungsteile 2 oder Kupplungsteile mit einem elastischen Teil 4 für die Anordnung in der Vertikalen ausgehen, deren Längsachsen der vertikalen Längsachse des Zentralelementes 1 entsprechen,
   die rohrförmigen Verbindungselemente 3 für die Anordnung in der Vertikalen an ihren beiden Enden je ein auf das starre Kupplungsteil 2 oder auf das Kupplungsteil mit einem elastischen Teil 4 am Zentralelement 1 abgestimmtes inwendiges Kupplungsteil aufweisen,
   jedes rohrförmige Verbindungselement 3 für die Anordnung in der Vertikalen an beiden Endbereichen in der Aussenwand je eine in einer Linie angeordnete Öffnung 5 aufweist, durch welche der elastische Teil 4 sichtbar ist, wobei die genannte Linie parallel zur Längsachse des rohrförmigen Verbindungselementes 3 für die Anordnung in der Vertikalen verläuft, und wobei die genannte Linie und die genannte Längsachse in einer planaren Ebene liegen,
   die Querschnitte
      - der von den Verbindungsknoten-Elementen ausgehenden entweder starren Kupplungsteile 2 oder den Kupplungsteilen mit einem elastischen Teil 4 und
      - der rohrförmigen Verbindungselemente 3 mit entweder einem inwendigen starren Kupplungsteil 2 oder mit einem inwendigen Kupplungsteil mit einem elastischen Teil 4
         formschlüssig aufeinander abgestimmt sind,
   und wobei gemäss einer zweiten Variante
   jedes Verbindungsknoten-Element in vertikaler Richtung zylinderförmig ausgebildet ist und eine mittig angeordnete Lochplatte 6 aufweist, wobei das Loch 7 zentral angeordnet ist,
   jedes rohrförmige Verbindungselement 3 für die Anordnung in der Vertikalen an beiden Enden je ein inwendiges Gewinde 8 aufweist, wobei in eines der beiden inwendigen Gewinde 8 ein mittig angeordneter Gewindestift 9 eingeschraubt ist, wobei der Durchmesser dieses Gewindestifts 9 auf den Durchmesser des Loches 7 in der Lochplatte 6 abgestimmt ist, und
   die Querschnitte
      - der von den Verbindungsknoten-Elementen in vertikaler Richtung ausgehenden Zylinder und
      - der rohrförmigen Verbindungselemente 3 für die Anordnung in der Vertikalen formschlüssig aufeinander abgestimmt sind.

Bevorzugte Ausführungsformen dieser Erfindung sind in den abhängigen Ansprüchen definiert.

Das erfindungsgemässe Gestellsystem kann zur Herstellung von Möbeln, insbesondere von Regalen, Büchergestellen, Schränken und Kästen, verwendet werden.

### Kurze Beschreibung der Zeichnungen

Im folgenden Teil werden mögliche Ausführungsformen der vorliegenden Erfindung beschrieben.

Dabei wird auch Bezug auf die Figuren genommen, die alle rein schematischen Charakter haben.
Figur 1 zeigt in Explosionsform eine perspektivische Ansicht von schräg oben einer ersten Ausführungsform eines Verbindungsknoten-Elementes mit einem Zentralelement 1, wobei in der Horizontalen drei und in der Vertikalen zwei starre Kupplungsteile 2 verwendet werden.

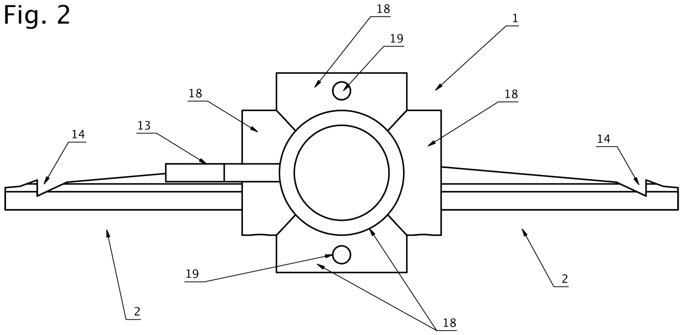

Figur 2 zeigt eine Seitenansicht von vorne des in Figur 1 gezeigten Verbindungsknoten-Elementes mit einem Zentralelement 1, wobei nur zwei starre, in der Horizontalen angeordnete Kupplungsteile 2 gezeigt sind.

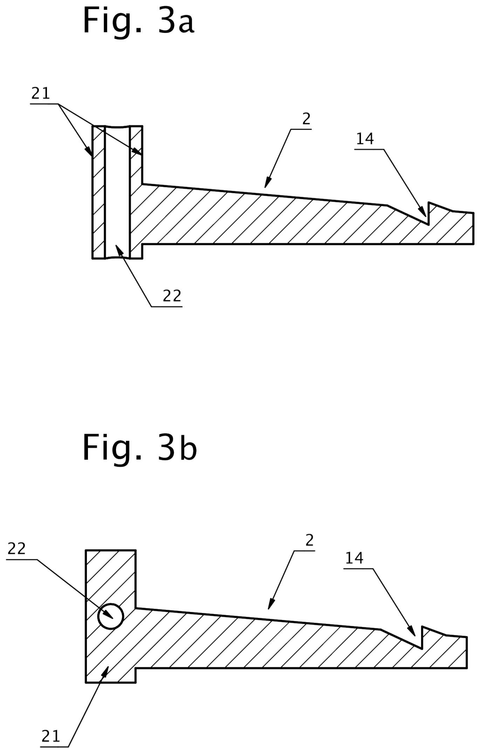

Figur 3a zeigt einen Querschnitt durch eine erste Ausführungsform eines starren Kupplungsteils 2.
Figur 3b zeigt einen Querschnitt durch eine zweite Ausführungsform eines starren Kupplungsteils 2.

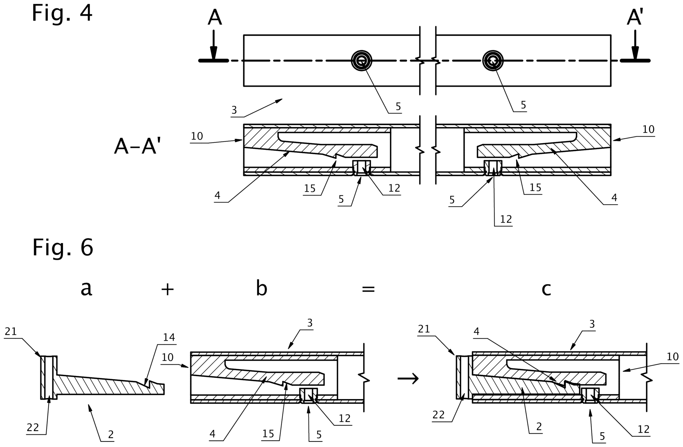

Figur 4 zeigt einen Längsschnitt durch die beiden Endbereiche eines rohrförmigen Verbindungselementes 3 für die Anordnung in der Horizontalen oder in der Vertikalen, wobei die Kupplungsteile mit einem elastischen Teil 4 als Insert 10 ausgebildet sind.

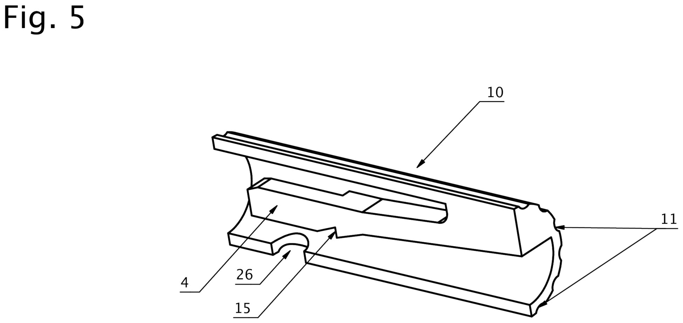

Figur 5 zeigt von schräg oben die perspektivische Ansicht eines Längsschnittes durch ein in Figur 4 dargestelltes Insert 10.
Figur 6 zeigt im Längsschnitt schematisch den Montageschritt eines starren Kupplungsteils 2 mit dem Kupplungsteil mit einem elastischen Teil 4 im rohrförmigen Verbindungselement 3.
Figur 7 zeigt in Explosionsform eine perspektivische Ansicht von schräg oben einer zweiten Ausführungsform eines Verbindungsknoten-Elementes mit einem Zentralelement 1, wobei in der Horizontalen drei starre Kupplungsteile 2 verwendet werden und in der Vertikalen die rohrförmigen Verbindungselemente 3 durch das Loch 7 in der Lochplatte 6 miteinander verschraubt sind.

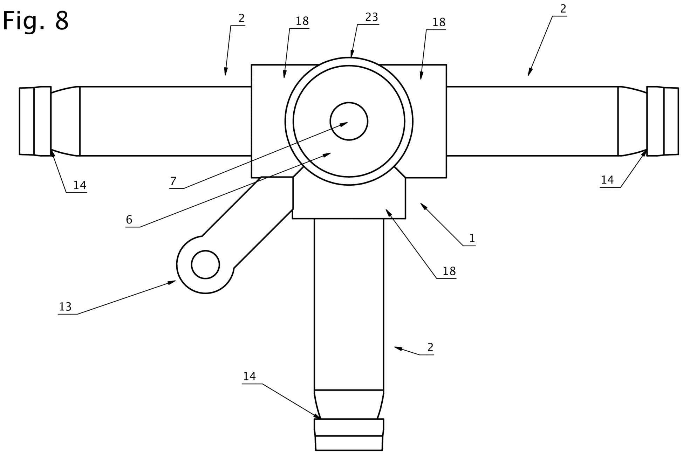

Figur 8 zeigt eine Draufansicht des in Figur 7 gezeigten Verbindungsknoten-Elementes mit einem Zentralelement 1.

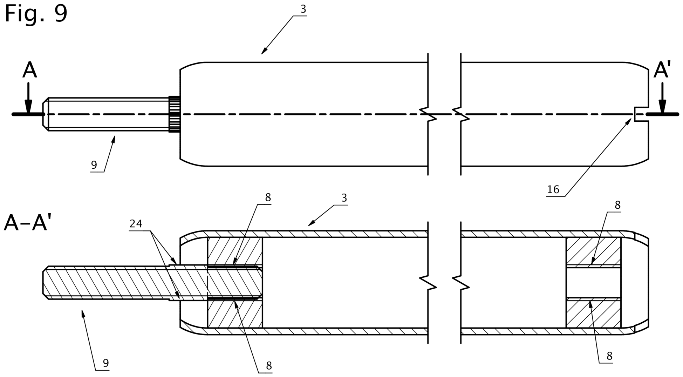

Figur 9 zeigt einen Längsschnitt durch die beiden Endbereiche eines rohrförmigen Verbindungselementes 3 für die Anordnung in der Vertikalen gemäss der zweiten Ausführungsform.

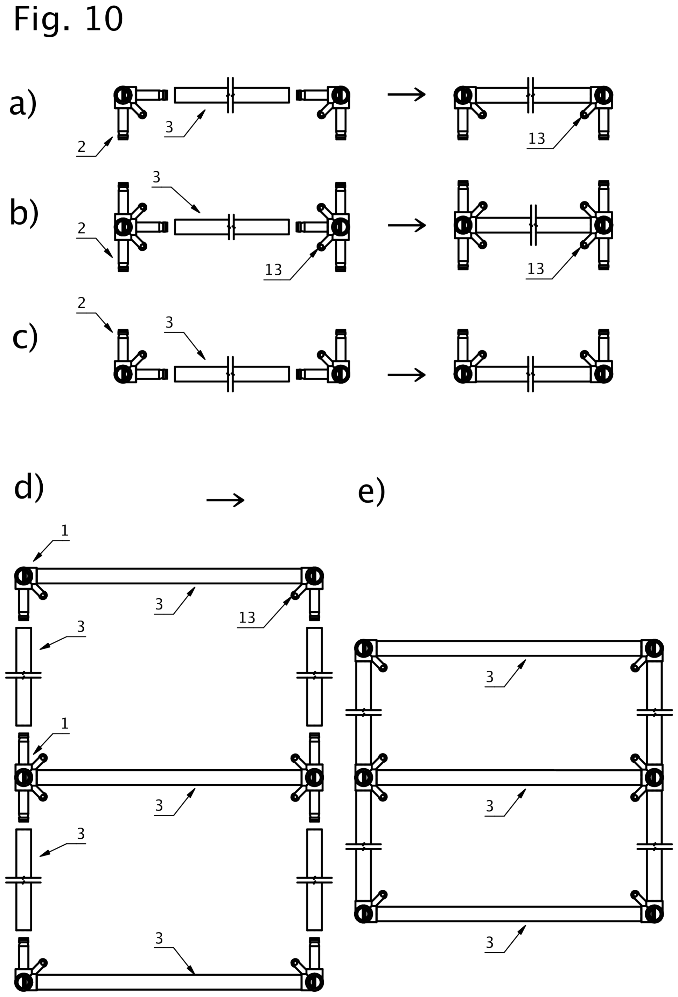

Figur 10 zeigt die Montageschritte in der Horizontalen in der Draufsicht gemäss einer möglichen ersten Ausführungsform.

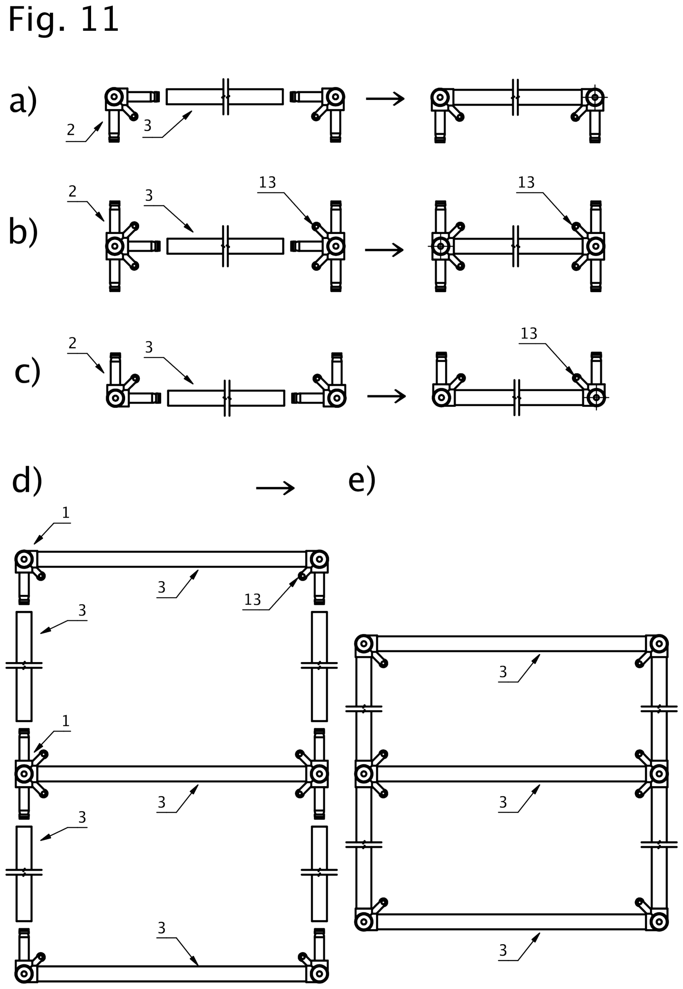

Figur 11 zeigt die Montageschritte in der Horizontalen in der Draufsicht gemäss einer möglichen zweiten Ausführungsform.

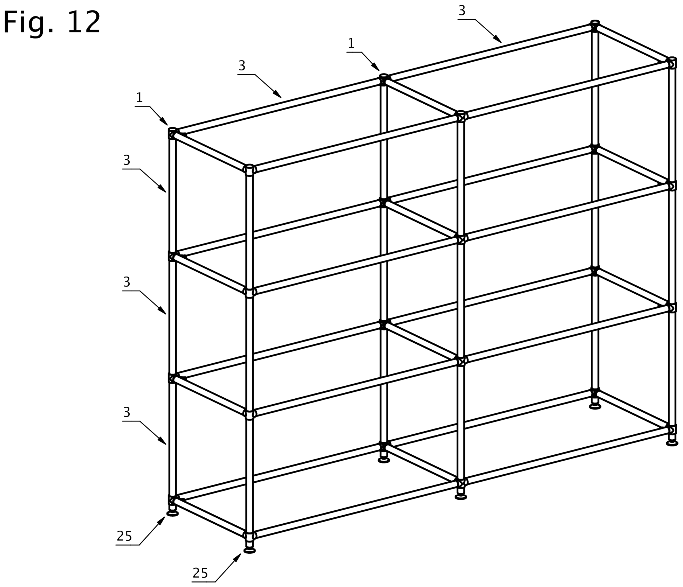

Figur 12 zeigt von schräg oben eine Seitenansicht eines montierten Regals mit zwei Elementen in der Länge und drei Elementen in der Höhe.

### Mögliche Ausführungsformen der Erfindung

Von jedem Zentralelement 1 gehen eins bis vier entweder starre Kupplungsteile 2 oder Kupplungsteile mit einem elastischen Teil 4 für die Anordnung in der Horizontalen aus, deren Längsachsen in einer Ebene liegen und in einem Winkel von 90° zur vertikalen Längsachse des Zentralelementes 1 angeordnet sind. Die genannten Kupplungsteile 2 sind in einem Winkel von 90°, respektive in einem Winkel von 180°, zueinander angeordnet.

Die rohrförmigen Verbindungselemente 3 für die Anordnung in der Horizontalen weisen an ihren beiden Enden je ein auf das starre Kupplungsteil 2 oder auf das Kupplungsteil mit einem elastischen Teil 4 am Zentralelement 1 abgestimmtes inwendiges Kupplungsteil auf.

Gemäss einer ersten Variante gehen von jedem Zentralelement 1 ein oder zwei entweder starre Kupplungsteile 2 oder Kupplungsteile mit einem elastischen Teil 4 für die Anordnung in der Vertikalen aus, deren Längsachsen der vertikalen Längsachse des Zentralelementes 1 entsprechen.

Die rohrförmigen Verbindungselemente 3 für die Anordnung in der Vertikalen weisen an ihren beiden Enden je ein auf das starre Kupplungsteil 2 oder auf das Kupplungsteil mit einem elastischen Teil 4 am Zentralelement 1 abgestimmtes inwendiges Kupplungsteil aufweisen.

Gemäss einer zweiten Variante weist jedes Verbindungsknoten-Element in vertikaler Richtung ein zylinderförmiges Zentralelement 1 mit einer mittig angeordneten Lochplatte 6 auf, wobei das Loch 7 zentral angeordnet ist.

Jedes rohrförmige Verbindungselement 3 für die Anordnung in der Vertikalen weist an beiden Enden je ein inwendiges Gewinde 8 auf, wobei in eines der beiden inwendigen Gewinde 8 ein mittig angeordneter Gewindestift 9 eingeschraubt ist, wobei der Durchmesser dieses Gewindestifts 9 auf den Durchmesser des Loches 7 in der Lochplatte 6 abgestimmt ist.

Mit anderen Worten: in horizontaler Richtung erfolgt die Verbindung immer zwischen einem starren Kupplungsteil 2 und einem Kupplungsteil mit einem elastischen Teil 4.

In vertikaler Richtung erfolgt die Verbindung gemäss einer ersten Variante zwischen einem starren Kupplungsteil 2 und einem Kupplungsteil mit einem elastischen Teil 4 oder gemäss einer zweiten Variante mittels Verschraubens der Verbindungsteile 8,9.

Es ist bevorzugt, dass sowohl bei der ersten Variante als auch bei der zweiten Variante von jedem Zentralelement 1 starre Kupplungsteile 2 für die Anordnung in der Horizontalen ausgehen.

Als Folge davon weisen die inwendigen Kupplungsteile in den rohrförmige Verbindungselementen 3 ein Kupplungsteil mit einem elastischen Teil 4 auf.

Es ist aber auch möglich, dass sowohl bei der ersten Variante als auch bei der zweiten Variante von jedem Zentralelement 1 Kupplungsteile mit einem elastischen Teil 4 für die Anordnung in der Horizontalen ausgehen.

Als Folge davon sind in den rohrförmige Verbindungselementen 3 inwendig die starren Kupplungsteile 2 angeordnet.

Im folgenden Teil wird eine mögliche Ausführungsform gemäss der oben erwähnten ersten Variante beschrieben.

Die nachfolgend angegebenen Masse sind als Richtwerte von einem Prototyp zu verstehen und müssen für die Praxis noch angepasst und verifiziert werden.

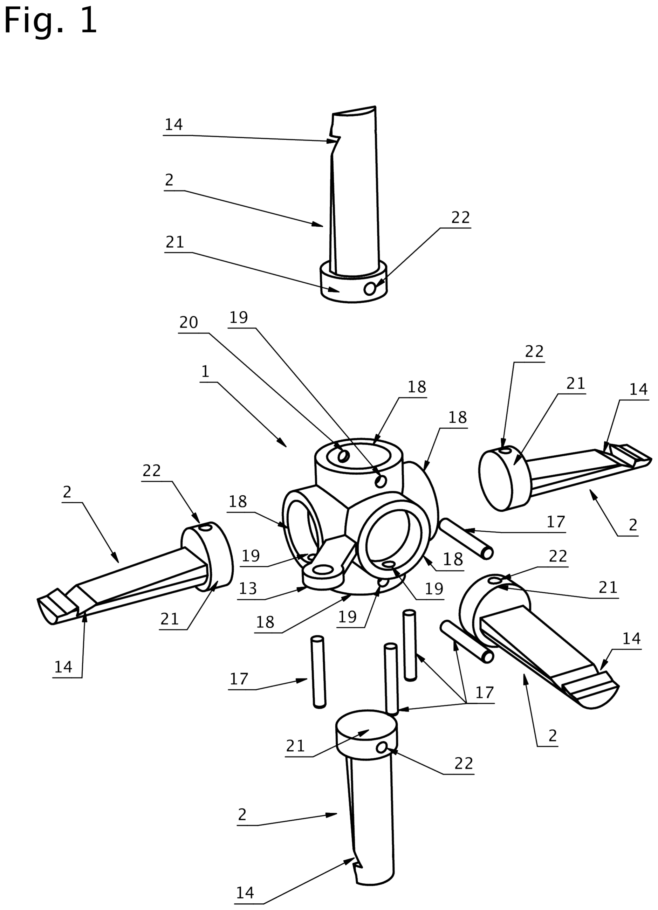

Das in Figur 1 gezeigte Verbindungsknoten-Element hat ein Zentralelement 1, von dem in der Horizontalen drei und in der Vertikalen zwei starre Kupplungsteile 2 ausgehen.

Das Zentralelement 1 und die starren Kupplungsteile 2 sind als Einzelteile gefertigt und sind aus einem Metall oder einer Legierung hergestellt und sind vorzugsweise verchromt.

Die starren Kupplungsteile 2 werden am Zentralelement 1 mittels Stiften 17 fixiert.

Die fünf vom Zentralelement 1 ausgehenden Zylinder 18 für die Aufnahme der starren Kupplungsteile 2 haben eine Länge von 5,98 mm, einen Aussendurchmesser von 20,84 mm, einen Innendurchmesser von 15,8 mm und somit eine Wandstärke von 2,52 mm.

Auf halber Länge ist in jeder Zylinderwand eine durchgehende Bohrung 19 und auf der gegenüberliegenden Seite eine halbe Bohrung 20 für die Aufnahme und die Fixierung der Stifte 17 vorhanden.

Vom Zentralelement 1 können eine oder zwei Haltevorrichtungen 13 für eine Platte, insbesondere für eine Glasplatte, ausgehen.

Die starren Kupplungsteile 2 haben an der dem Zentralelement 1 zugewandten Seite eine zylindrische Form mit einem Durchmesser von 15,8 mm und weisen eine mittig im Zylinder 21 angeordnete durchgehende Bohrung 22 auf.

Die starren Kupplungsteile 2 verlaufen in Richtung der dem Zentralelement 1 abgewandten Seite über eine Distanz von 40,2 mm verjüngend von anfänglich 6,9 mm auf 4,0 mm.

Die starren Kupplungsteile 2 weisen an ihren Enden eine angeschrägte und taillierte Kerbe 14 auf, welche parallel oder in einem Winkel von 90° zur mittig im Zylinder 21 angeordneten durchgehenden Bohrung 22 verläuft. Bei der Montage gleitet über diese angeschrägte und taillierte Kerbe 14 der Kupplungsteil mit einem elastische Teil 4 und rastet dann ein.

Die rohrförmigen Verbindungselemente 3 weisen an ihren beiden Enden je ein auf das starre Kupplungsteil 2 am Zentralelement 1 abgestimmtes inwendiges Kupplungsteil mit einem elastischen Teil 4 auf.

Die inwendigen Kupplungsteile mit einem elastischen Teil 4 sind als Insert 10 ausgebildet. Die aus einem Kunststoff hergestellten Inserts 10 haben eine Länge von 54,3 mm, einen Innendurchmesser von 12,75 mm und eine Wandstärke von 1,9 mm. Sie weisen an ihrer Aussenseite eine auf die Öffnung 5 im rohrförmigen Verbindungselement 3 abgestimmte Öffnung 26 auf, durch welche der elastische Teil 4 sichtbar ist. Sie weisen entlang ihrer Längsachse an ihrer Aussenseite vorzugsweise Rippen 11 auf. Die Inserts 10 sind in die rohrförmigen Verbindungselemente 3 eingepresst und können zusätzlich verklebt sein. Die Inserts 10 können an dem Ende, mit welchem sie in die rohrförmigen Verbindungselemente 3 eingepresst werden, angeschrägt sein.

Die rohrförmigen Verbindungselemente 3 können eine zusätzliche Öffnung aufweisen, durch welche mit einer Madenschraube das Insert 10 zusätzlich fixiert werden kann. Die Madenschraube ist vorzugsweise versenkt.

Die rohrförmigen Verbindungselemente 3 weisen an beiden Endbereichen in der Aussenwand je eine in einer Linie derart angeordnete Öffnung 5 auf, dass der elastische Teil 4 sichtbar ist. Diese Linie verläuft parallel zur Längsachse des rohrförmigen Verbindungselementes 3. Diese Linie und die genannte Längsachse liegen in einer planaren Ebene.

Durch diese Öffnungen 5,26 können die aufeinander abgestimmten, entriegelbaren Kupplungsteile 2,4 durch Einwirkung eines von aussen applizierten Stiftes entriegelt werden.

Bei einem fertig montierten Gestellsystem sollen diese Öffnungen 5 aus ästhetischen Gründen nicht auffallen.

Es ist bevorzugt, dass diese Öffnungen 5 in horizontaler Richtung entweder nach innen oder nach unten gerichtet sind.

In vertikaler Richtung können bei einem in einer Ecke angeordneten Verbindungsknoten-Element diese Öffnungen 5 auf der nach innen gerichteten Winkelhalbierenden liegen. Bei einem inwendig angeordneten Verbindungsknoten-Element können diese Öffnungen 5 gegen innen gerichtet sein.

Je nach gewünschter Ausrichtung dieser Öffnungen 5 in einem fertig montierten Gestellsystem müssen die starren Kupplungsteile 2 für die Anordnung in der Horizontalen und die starren Kupplungsteile 2 für die Anordnung in der Vertikalen entsprechend ausgerichtet sein.

Es ist auch möglich, dass in die Öffnungen 5 in den rohrförmigen Verbindungselementen 3 und in die Öffnungen 26 im Insert 10, durch welche der elastische Teil 4 sichtbar ist, eine Hohlniete 12 eingepresst ist.

Diese Hohlniete 12 dient einerseits der Fixierung des Inserts 10 gegenüber einer Verdrehung und andererseits können durch die Öffnung in der Hohlniete 12 die aufeinander abgestimmten, entriegelbaren Kupplungsteile 2,4 durch Einwirkung eines von aussen applizierten Stiftes entriegelt werden.

Das Kupplungsteil mit einem elastischen Teil 4 im rohrförmigen Verbindungselement 3 ist als Insert 10 ausgebildet und ist an einem Ende über eine Länge von 12,5 mm und über den ganzen Innendurchmesser des Inserts 10 starr an das Insert 10 fixiert und verläuft in Richtung des anderen Endes ansteigend und frei abstehend zur Innenwand des Inserts 10.

Dieser abstehende Teil hat eine Länge von 36,6 mm. Im Abstand von 15,0 mm vom freien Ende des Kupplungsteiles mit einem elastischen Teil 4 ist eine angeschrägte Kerbe 15 vorhanden, die auf die Kerbe 14 im starren Kupplungsteil 2 abgestimmt ist.

Die Inserts 10 können aus einem Kunststoff hergestellt sein.

Die rohrförmigen Verbindungselemente 3 haben einen runden Querschnitt, einen Aussendurchmesser von etwa 19,0 mm und können Längen von 73 cm, 36 cm oder 17 cm aufweisen.

Die Aussendurchmesser der fünf vom Zentralelement 1 ausgehenden Zylinder 18 für die Aufnahme der starren Kupplungsteile 2 und die Aussendurchmesser der rohrförmigen Verbindungselemente 3 können je nach gewünschtem Design gleich oder geringfügig verschieden sein.

Die rohrförmigen Verbindungselemente 3 können aus Stahl, vorzugsweise aus Chromstahl, hergestellt sein.

Im folgenden Teil wird eine mögliche Ausführungsform gemäss der oben erwähnten zweiten Variante beschrieben.

Die nachfolgend angegebenen Masse sind als Richtwerte von einem Prototyp zu verstehen und müssen für die Praxis noch angepasst und verifiziert werden.

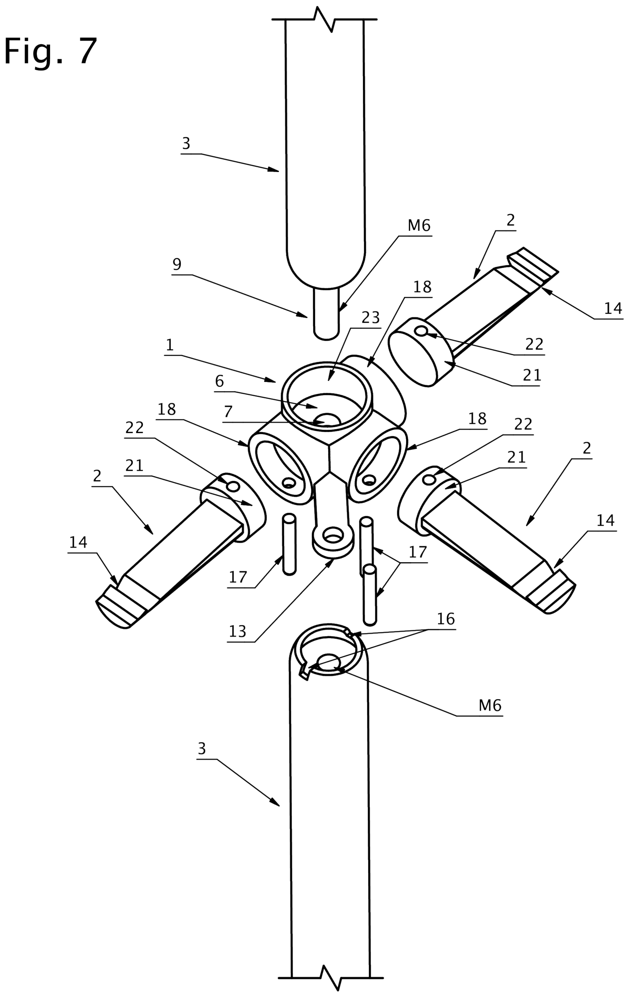

Das in Figur 7 gezeigte Verbindungsknoten-Element hat ein Zentralelement 1, von dem in der Horizontalen drei starre Kupplungsteile 2 ausgehen.

Diese starren Kupplungsteile 2 sind analog der oben beschriebenen ersten Variante aufgebaut und an das Zentralelement 1 fixiert.

Dieses Zentralelement 1 ist in vertikaler Richtung zylinderförmig ausgebildet und weist eine mittig angeordnete Lochplatte 6 auf. Das Loch 7 in der Lochplatte 6 ist zentral angeordnet. Der Aussendurchmesser des Zylinders 23 beträgt 21,8 mm und der Innendurchmesser beträgt 19,0 mm und somit resultiert eine Wandstärke von 1,4 mm.

Der Zylinder 23 hat eine Gesamtlänge von 25,0 mm und im Abstand von 10 mm von den Zylinderenden ist eine 5,0 mm dicke Lochplatte 6 angeordnet. Der Durchmesser des Loches 7 in der Lochplatte 6 beträgt 6,4 mm.

Somit passen in die von der Lochplatte 6 ausgehenden freien Zylindervolumen die rohrförmigen Verbindungselemente 3 für die Anordnung in der Vertikalen.

Vom Zentralelement 1 können eine oder zwei Haltevorrichtungen 13 für eine Platte, insbesondere für eine Glasplatte, ausgehen.

Die rohrförmigen Verbindungselemente 3 für die Anordnung in der Vertikalen haben runden Querschnitt, einen Aussendurchmesser von etwa 19,0 mm und können Längen von 73 cm, 36 cm, 17 cm, 11 cm oder 6 cm aufweisen.

Die Aussendurchmesser der rohrförmigen Verbindungselemente 3 für die Anordnung in der Vertikalen sind auf den Innendurchmesser der beiden vom Zentralelement 1 in vertikaler Richtung ausgehenden Zylinder 23 abgestimmt.

Die rohrförmigen Verbindungselemente 3 können aus Stahl, vorzugsweise aus Chromstahl, hergestellt sein.

In die beiden Enden eines rohrförmigen Verbindungselementes 3 für die Anordnung in der Vertikalen ist je ein 10,0 mm langer Zylinder eingepresst, der ein inwendiges Gewinde 8 aufweist. Der Durchmesser des Gewindes 8 beträgt 5,2 mm.

Die Distanz vom Rohrende bis zum Anfang des inwendigen Gewindes 8 beträgt 2,5 mm.

In eines der beiden inwendigen Gewinde 8 ist ein mittig angeordneter Gewindestift 9 eingeschraubt, wobei der Durchmesser dieses Gewindestifts 9 auf den Durchmesser des Loches 7 in der Lochplatte 6 abgestimmt ist.

Der Gewindestift 9 hat eine Länge von 27,7 mm. Im Abstand von 7,0 mm vom ersten Ende des Gewindestiftes 9 und im Abstand von 16,0 mm vom zweiten Ende des Gewindestiftes 9 ist eine 4,7 mm lange Verdickung 24 ohne Gewinde vorhanden. Diese Verdickung 24 dient als Anschlag beim Einschrauben des Gewindestiftes 9 in das inwendige Gewinde 8.

Der Gewindestift 9 wird mit der kürzeren Gewindelänge von 7,0 mm in den Zylinder 23 eingeschraubt.

Das dem eingeschraubten Gewindestift 9 gegenüberliegende Ende des rohrförmigen Verbindungselementes 3 kann wenigstens zwei symmetrisch angeordnete Montagekerben 16 aufweisen.

Die rohrförmigen Verbindungselemente 3 für die Anordnung in der Vertikalen sind vorzugsweise an ihren Enden abgerundet.

Ein modulares, mehrfach montierbares und demontierbares Gestellsystem gemäss der oben erwähnten ersten Variante, in der Form eines Regals mit zwei Elementen in der Länge und drei Elementen in der Höhe, kann wie folgt montiert werden:
Schritt 1: Zwei kürzere rohrförmige Verbindungselemente 3 für die Anordnung in der Horizontalen werden auf beiden Seiten mit einem in einer Ecke anzuordnenden und entsprechend ausgerüsteten Verbindungsknoten-Element verbunden und auf einer Arbeitsfläche bereitgelegt.
Schritt 2: Ein kürzeres rohrförmiges Verbindungselement 3 für die Anordnung in der Horizontalen wird auf beiden Seiten mit einem inwendig anzuordnenden und entsprechend ausgerüsteten Verbindungsknoten-Element verbunden und auf der gleichen Arbeitsfläche zwischen das gemäss Schritt 1 erhaltene Produkt bereitgelegt.
Schritt 3: Zwischen die so bereitgelegten Teile werden vier längere rohrförmige Verbindungselemente 3 für die Anordnung in der Horizontalen gelegt und alle Teile werden zusammen geschoben. An einzelnen Stellen ist ein synchrones Zusammenschieben notwendig.
   Die Schritte 1 bis 3 werden dreimal wiederholt.
Schritt 4: Bei einem nach Schritt 3 erhaltenen Produkt werden an allen sechs Stellen die Fusselemente 25 in den vom Verbindungsknoten-Element in vertikaler Richtung nach unten ausgehenden Zylinder 18 montiert.
Schritt 5: An allen sechs Stellen werden in den vom Verbindungsknoten-Element in vertikaler Richtung nach oben ausgehenden Zylinder 18 die rohrförmigen Verbindungselemente 3 für die Anordnung in der Vertikalen montiert.
Schritt 6: Bei einem nach Schritt 5 erhaltenen Produkt wird ein nach Schritt 3 erhaltenes Produkt gelegt und an allen sechs Stellen mit den montierten rohrförmigen Verbindungselementen 3 für die Anordnung in der Vertikalen synchron verbunden.
   Die Schritte 5 und 6 werden zweimal wiederholt.
Schritt 7: An allen sechs Stellen werden in den vom Verbindungsknoten-Element in vertikaler Richtung nach oben ausgehenden leeren Zylinder 18 die Abdeckteile montiert.

Die jeweils gewünschten Böden, Deckel, Rückwände und Seitenwände können gemäss dem Stand der Technik montiert und demontiert werden. Ebenso kann das Zubehör, beispielsweise Schubladen, Schwenktüren oder Klapptüren, gemäss dem Stand der Technik montiert und demontiert werden.

Das so montierte Regal kann wie folgt demontiert werden:
Die Böden, Deckel, Rückwände und Seitenwände sowie das Zubehör werden entfernt.

Die Abdeckteile werden entfernt. Das oberste nach Schritt 3 erhaltene Produkt wird an allen sechs Stellen durch Einwirkung eines von aussen applizierten Stiftes durch die oberen Öffnungen 5 in den rohrförmigen Verbindungselementen 3 für die Anordnung in der Vertikalen und die Öffnung 26 im Insert 10 entriegelt, synchron angehoben und in seine Einzelteile zerlegt.

Die sechs rohrförmigen Verbindungselemente 3 für die Anordnung in der Vertikalen werden durch Einwirkung eines von aussen applizierten Stiftes durch die unteren Öffnungen 5 und die Öffnung 26 im Insert 10 entriegelt und entfernt.

Diese Schritte werden so lange wiederholt, bis alle Teile demontiert sind.

Ein modulares, mehrfach montierbares und demontierbares Gestellsystem gemäss der oben erwähnten zweiten Variante, in der Form eines Regals mit zwei Elementen in der Länge und drei Elementen in der Höhe, kann wie folgt montiert werden:
Schritt 1: Zwei kürzere rohrförmige Verbindungselemente 3 für die Anordnung in der Horizontalen werden auf beiden Seiten mit einem in einer Ecke anzuordnenden und entsprechend ausgerüsteten Verbindungsknoten-Element verbunden und auf einer Arbeitsfläche bereitgelegt.
Schritt 2: Ein kürzeres rohrförmiges Verbindungselement 3 für die Anordnung in der Horizontalen wird auf beiden Seiten mit einem inwendig anzuordnenden und entsprechend ausgerüsteten Verbindungsknoten-Element verbunden und auf der gleichen Arbeitsfläche zwischen das gemäss Schritt 1 erhaltene Produkt bereitgelegt.
Schritt 3: Zwischen die so bereitgelegten Teile werden vier längere rohrförmige Verbindungselemente 3 für die Anordnung in der Horizontalen gelegt und alle Teile werden zusammen geschoben. An einzelnen Stellen ist ein synchrones Zusammenschieben notwendig.
   Die Schritte 1 bis 3 werden dreimal wiederholt.
Schritt 4: Bei einem nach Schritt 3 erhaltenen Produkt werden an allen sechs Stellen die Fusselemente 25 in den vom Verbindungsknoten-Element in vertikaler Richtung nach unten ausgehenden Zylinder 23 unterlegt.
Schritt 5: An allen sechs Stellen werden in den vom Verbindungsknoten-Element in vertikaler Richtung nach oben ausgehenden Zylinder 23 die rohrförmigen Verbindungselemente 3 für die Anordnung in der Vertikalen mit dem Gewindestift 9 voran eingelegt und mit dem Fusselement 25 verschraubt.
Schritt 6: Bei einem nach Schritt 5 erhaltenen Produkt wird ein nach Schritt 3 erhaltenes Produkt gelegt und an allen sechs Stellen mit einem rohrförmigen Verbindungselement 3 für die Anordnung in der Vertikalen verschraubt.
Schritt 7: Bei einem nach Schritt 6 erhaltenen Produkt wird ein nach Schritt 3 erhaltenes Produkt gelegt und an allen sechs Stellen mit einem rohrförmigen Verbindungselement 3 für die Anordnung in der Vertikalen verschraubt.
Schritt 8: Bei einem nach Schritt 7 erhaltenen Produkt wird ein nach Schritt 3 erhaltenes Produkt gelegt und an allen sechs Stellen werden in den vom Verbindungsknoten-Element in vertikaler Richtung nach oben ausgehenden Zylinder 23 die Abdeckteile eingeschraubt und eingedrückt.

Die jeweils gewünschten Böden, Deckel, Rückwände und Seitenwände können gemäss dem Stand der Technik montiert und demontiert werden. Ebenso kann das Zubehör, beispielsweise Schubladen, Schwenktüren oder Klapptüren, gemäss dem Stand der Technik montiert und demontiert werden.

Das so montierte Regal kann wie folgt demontiert werden:
Die Böden, Deckel, Rückwände und Seitenwände sowie das Zubehör werden entfernt.

Die Abdeckteile werden entfernt. Das oberste nach Schritt 3 erhaltene Produkt wird angehoben und in seine Einzelteile zerlegt.

Dabei werden das starre Kupplungsteil 2 und das Kupplungsteil mit einem elastischen Teil 4 durch Einwirkung eines von aussen applizierten Stiftes durch die Öffnungen 5 in den rohrförmigen Verbindungselementen 3 für die Anordnung in der Horizontalen und die Öffnung 26 im Insert 10 entriegelt.

Die sechs rohrförmigen Verbindungselemente 3 für die Anordnung in der Vertikalen werden abgeschraubt.

Diese Schritte werden so lange wiederholt, bis alle Teile demontiert sind.

### Liste der Bezugszeichen

In der vorliegenden Erfindung werden folgende Bezugszeichen verwendet:
- 1: Zentralelement
- 2: Starre Kupplungsteile
- 3: Rohrförmige Verbindungselemente für die Anordnung in der Horizontalen oder in der Vertikalen
- 4: Elastischer Teil an einem Kupplungsteil
- 5: Öffnung in der Aussenwand eines rohrförmigen Verbindungselementes 3 für die Anordnung in der Horizontalen oder in der Vertikalen
- 6: Lochplatte
- 7: Loch in der Lochplatte 6
- 8: Inwendiges Gewinde
- 9: Gewindestift (Grösse M6)
- 10: Insert
- 11: Rippen
- 12: Hohlniete
- 13: Haltevorrichtung
- 14: Kerbe am starren Kupplungsteil 2
- 15: Kerbe am Kupplungsteil mit einem elastischen Teil 4
- 16: Montagekerbe
- 17: Stift
- 18: Vom Zentralelement 1 ausgehender Zylinder in horizontaler oder vertikaler Richtung
- 19: Durchgehende Bohrung im Zylinder 18
- 20: Halbe Bohrung im Zylinder 18
- 21: Zylinder am starren Kupplungsteil 2
- 22: Durchgehende Bohrung im Zylinder 21
- 23: Vom Zentralelement 1 ausgehender Zylinder in vertikaler Richtung gemäss zweiter Variante
- 24: Verdickung am Gewindestift 9
- 25: Fusselement
- 26: Öffnung im Insert 10.

## Patentansprüche

1. Modulares, mehrfach montierbares und demontierbares Gestellsystem, umfassend
- Verbindungsknoten-Elemente mit einem Zentralelement, von dem
• Kupplungsteile für die Anordnung in der Horizontalen und
• Kupplungsteile oder Verbindungselemente für die Anordnung in der Vertikalen ausgehen,
- rohrförmige Verbindungselemente mit Kupplungsteilen für die Anordnung in der Horizontalen,
- rohrförmige Verbindungselemente mit Kupplungsteilen oder mit verschraubbaren Verbindungselementen für die Anordnung in der Vertikalen,
- Fusselemente, sowie
- Abdeckteile,
wobei alle genannten Kupplungsteile aufeinander abgestimmt, verriegelbar und entriegelbar sind, und wobei
die rohrförmigen Verbindungselemente mit Kupplungsteilen oder mit verschraubbaren Verbindungselementen für die Anordnung in der Vertikalen durch die Zentralelemente entweder mit einem Fusselement oder mit einem weiteren rohrförmigen vertikalen Verbindungselement verbindbar oder verschraubbar sind,
**dadurch gekennzeichnet, dass**
jedes Verbindungsknoten-Element ein Zentralelement (1) aufweist,
von jedem Zentralelement (1) eins bis vier entweder starre Kupplungsteile (2) oder Kupplungsteile mit einem elastischen Teil (4) für die Anordnung in der Horizontalen ausgehen, deren Längsachsen in einer Ebene liegen und in einem Winkel von 90° zur vertikalen Längsachse des Zentralelementes (1) angeordnet sind, und diese Kupplungsteile in einem Winkel von 90°, respektive in einem Winkel von 180°, zueinander angeordnet sind,
die rohrförmigen Verbindungselemente (3) für die Anordnung in der Horizontalen an ihren beiden Enden je ein auf das starre Kupplungsteil (2) oder auf das Kupplungsteil mit einem elastischen Teil (4) am Zentralelement (1) abgestimmtes inwendiges Kupplungsteil aufweisen,
jedes rohrförmige Verbindungselement (3) für die Anordnung in der Horizontalen an beiden Endbereichen in der Aussenwand je eine in einer Linie angeordnete Öffnung (5) aufweist, durch welche der elastische Teil (4) sichtbar ist, wobei die genannte Linie parallel zur Längsachse des rohrförmigen Verbindungselementes (3) für die Anordnung in der Horizontalen verläuft, und wobei die genannte Linie und die genannte Längsachse in einer planaren Ebene liegen,
wobei gemäss einer ersten Variante
von jedem Zentralelement (1) ein oder zwei entweder starre Kupplungsteile (2) oder Kupplungsteile mit einem elastischen Teil (4) für die Anordnung in der Vertikalen ausgehen, deren Längsachsen der vertikalen Längsachse des Zentralelementes (1) entsprechen,
die rohrförmigen Verbindungselemente (3) für die Anordnung in der Vertikalen an ihren beiden Enden je ein auf das starre Kupplungsteil (2) oder auf das Kupplungsteil mit einem elastischen Teil (4) am Zentralelement (1) abgestimmtes inwendiges Kupplungsteil aufweisen,
jedes rohrförmige Verbindungselement (3) für die Anordnung in der Vertikalen an beiden Endbereichen in der Aussenwand je eine in einer Linie angeordnete Öffnung (5) aufweist, durch welche der elastische Teil (4) sichtbar ist, wobei die genannte Linie parallel zur Längsachse des rohrförmigen Verbindungselementes (3) für die Anordnung in der Vertikalen verläuft, und wobei die genannte Linie und die genannte Längsachse in einer planaren Ebene liegen,
die Querschnitte
• der von den Verbindungsknoten-Elementen ausgehenden entweder starren Kupplungsteile (2) oder den Kupplungsteilen mit einem elastischen Teil (4) und
• der rohrförmigen Verbindungselemente (3) mit entweder einem inwendigen starren Kupplungsteil (2) oder mit einem inwendigen Kupplungsteil mit einem elastischen Teil (4)
formschlüssig aufeinander abgestimmt sind,
und wobei gemäss einer zweiten Variante
jedes Verbindungsknoten-Element in vertikaler Richtung zylinderförmig ausgebildet ist und eine mittig angeordnete Lochplatte (6) aufweist, wobei das Loch (7) zentral angeordnet ist,
jedes rohrförmige Verbindungselement (3) für die Anordnung in der Vertikalen an beiden Enden je ein inwendiges Gewinde (8) aufweist, wobei in eines der beiden inwendigen Gewinde (8) ein mittig angeordneter Gewindestift (9) eingeschraubt ist, wobei der Durchmesser dieses Gewindestifts (9) auf den Durchmesser des Loches (7) in der Lochplatte (6) abgestimmt ist, und
die Querschnitte
• der von den Verbindungsknoten-Elementen in vertikaler Richtung ausgehenden Zylinder und
• der rohrförmigen Verbindungselemente (3) für die Anordnung in der Vertikalen formschlüssig aufeinander abgestimmt sind.

2. Gestellsystem nach Anspruch 1, **dadurch gekennzeichnet, dass**
- die rohrförmigen Verbindungselemente (3) mit inwendigen Kupplungsteilen für die Anordnung in der Horizontalen und
- die rohrförmigen Verbindungselemente (3) mit inwendigen Kupplungsteilen oder mit verschraubbaren Verbindungselementen (8,9) für die Anordnung in der Vertikalen
einen runden oder einen mehreckigen, insbesondere einen quadratischen, sechseckigen oder achteckigen, Querschnitt haben.

3. Gestellsystem nach einem der Ansprüche 1 bis 2, **dadurch gekennzeichnet, dass** die Kupplungsteile mit einem elastischen Teil (4) in den rohrförmigen Verbindungselementen (3) für die Anordnung in der Horizontalen oder in der Vertikalen als Insert (10) ausgebildet sind, das an seiner Aussenseite eine auf die Öffnung (5) im rohrförmigen Verbindungselement (3) abgestimmte Öffnung (26) aufweist, durch welche der elastische Teil (4) sichtbar ist, und das vorzugsweise entlang seiner Längsachse an seiner Aussenseite Rippen (11) aufweist.

4. Gestellsystem nach Anspruch 3, **dadurch gekennzeichnet, dass** die Inserts (10) in die rohrförmigen Verbindungselemente (3) eingepresst sind und zur besseren Fixierung gegebenenfalls noch zusätzlich verklebt sind.

5. Gestellsystem nach einem der Ansprüche 3 bis 4, **dadurch gekennzeichnet, dass** die rohrförmigen Verbindungselemente (3) an beiden Endbereichen in der Aussenwand je eine zusätzliche Öffnung aufweisen,
welche auf der gleichen Linie liegen, wie die Linie, die durch die Öffnungen (5) gebildet wird, durch welche der elastische Teil (4) sichtbar ist, und
durch welche ein Fixierungsteil zur Fixierung des Inserts (10) eingebracht ist, beispielsweise in der Form einer Madenschraube.

6. Gestellsystem nach einem der Ansprüche 1 bis 5, **dadurch gekennzeichnet, dass** in die Öffnungen (5) in den rohrförmigen Verbindungselementen (3), durch welche das Kupplungsteil mit einem elastischen Teil (4) sichtbar ist, eine Hohlniete (12) eingepresst ist.

7. Gestellsystem nach einem der Ansprüche 1 bis 6, **dadurch gekennzeichnet, dass** die Verbindungsknoten-Elemente wenigstens eine Haltevorrichtung (13) für eine Platte, insbesondere für eine Glasplatte, aufweisen.

8. Gestellsystem nach Anspruch 7, **dadurch gekennzeichnet, dass** die Haltevorrichtung (13) für eine Platte auf der Winkelhalbierenden zwischen zwei entweder starren Kupplungsteilen (2) oder Kupplungsteilen mit einem elastischen Teil (4) für die Anordnung in der Horizontalen liegt.

9. Gestellsystem nach einem der Ansprüche 1 bis 8, **dadurch gekennzeichnet, dass** die starren Kupplungsteile (2) und die Kupplungsteile mit einem elastischen Teil (4) zwecks Einrastens je eine aufeinander abgestimmte, angeschrägte Kerbe (14,15) aufweisen.

10. Gestellsystem nach einem der Ansprüche 1 bis 9, **dadurch gekennzeichnet, dass** die vom Zentralelement (1) ausgehenden starren Kupplungsteile (2) in Richtung der dem Zentralelement (1) abgewandten Seite verjüngend verlaufen und an ihrem Ende eine Kerbe (14) aufweisen.

11. Gestellsystem nach einem der Ansprüche 1 bis 10, **dadurch gekennzeichnet, dass** die Kupplungsteile mit einem elastischen Teil (4) in den rohrförmigen Verbindungselementen (3) in Richtung des Rohrendes verjüngend verlaufen und an ihrem Ende eine Kerbe (15) aufweisen.

12. Gestellsystem nach einem der Ansprüche 1 bis 11, **dadurch gekennzeichnet, dass**
- die starren Kupplungsteile (2) als Platten, vorzugsweise als rechteckige Platten, ausgebildet sind, die mittig angeordnet eine Öffnung, insbesondere eine quadratische oder rechteckige Öffnung, aufweisen, und dass
- die Kupplungsteile mit einem elastischen Teil (4) als abgerundete oder als angeschrägte Kerben (15) oder als Stifte mit einem runden oder mehreckigen Querschnitt ausgebildet und derart angeordnet sind, dass sie in die Öffnung in den genannten Platten einrasten.

13. Gestellsystem nach einem der Ansprüche 1 bis 12, **dadurch gekennzeichnet, dass** die Öffnungen (5) in der Aussenwand der rohrförmigen Verbindungselemente (3) für die Anordnung in der Horizontalen in montierter Form entweder nach innen oder nach unten gerichtet sind.

14. Gestellsystem nach einem der Ansprüche 1 bis 13, **dadurch gekennzeichnet, dass** die rohrförmigen Verbindungselemente (3) für die Anordnung in der Vertikalen an ihren Enden abgerundet sind.

15. Gestellsystem nach einem der Anspruch 1 bis 14, **dadurch gekennzeichnet, dass** die mit verschraubbaren Verbindungselementen (8,9) ausgerüsteten rohrförmigen Verbindungselemente (3) für die Anordnung in der Vertikalen auf der dem eingeschraubten Gewindestift (9) gegenüberliegende Ende wenigstens zwei symmetrisch angeordnete Montagekerben (16) aufweisen.

16. Gestellsystem nach einem der Ansprüche 1 bis 15, **dadurch gekennzeichnet, dass** das Zentralelement (1) und entweder die starren Kupplungsteile (2) oder die Kupplungsteile mit einem elastischen Teil (4) als Einzelteile gefertigt sind und mittels eines eingepressten Stiftes (17) miteinander verbunden sind.

17. Gestellsystem nach einem der Ansprüche 1 bis 15, **dadurch gekennzeichnet, dass** das Zentralelement (1) und die starren Kupplungsteile (2) aus einem Stück gegossen sind und insbesondere aus einer Legierung oder aus Stahl hergestellt sind.

18. Gestellsystem nach einem der Ansprüche 1 bis 17, **dadurch gekennzeichnet, dass** die rohrförmigen Verbindungselemente (3) aus Stahl, vorzugsweise aus Chromstahl, hergestellt sind.

19. Gestellsystem nach einem der Ansprüche 3 bis 18, **dadurch gekennzeichnet, dass** die Inserts (10) aus einem Kunststoff hergestellt sind.

20. Verwendung des Gestellsystem nach einem der Ansprüche 1 bis 19 zur Herstellung von Möbeln, insbesondere von Regalen, Büchergestellen, Schränken und Kästen.
